# EUROPEAN PATENT APPLICATION

(11) **EP 4 726 948 A1**
(43) Date of publication of application: **15.04.2026**
(21) Application number: 25191480.0
(22) Date of filing: 24.07.2025
(51) Int. Cl.: H02J 3/32, H02J 7/34, H02J 7/00, H02J 1/10, H02J 3/38, H02J 3/46, H02J 4/00, H02J 4/20, H02M 7/797

(54) **CONTROL METHOD FOR INTEGRATED STORAGE AND CHARGING DEVICE, INTEGRATED STORAGE AND CHARGING DEVICE, AND COMPUTER-READABLE STORAGE MEDIUM**

(30) Priority: 10.10.2024 CN 202411411266
(71) Applicant: Shanghai Sunnic New Energy Technology Co., Ltd, Shanghai 200082 (CN)
(72) Inventor: Zhang, Xu, Shanghai 200082 (CN); Kong, Jian, Shanghai 200082 (CN); Lin, Hong, Shanghai 200082 (CN); Wang, Minghui, Shanghai 200082 (CN); Hu, Jiangwen, Shanghai 200082 (CN); Ma, Wei, Shanghai 200082 (CN); Liu, Xintian, Shanghai 200082 (CN)
(74) Representative: KLIMENT & HENHAPEL

(57) **Abstract**

The present disclosure provides a control method for an integrated storage and charging device, an integrated storage and charging device, and a computer-readable storage medium. The integrated storage and charging device includes at least one bidirectional ACDC and at least one energy storage battery, the energy storage battery and the bidirectional ACDC are connected through a DC bus, and the energy storage battery discharges to a DC load through the DC bus. The method includes: acquiring voltage information of the energy storage battery in response to an instruction to discharge to the DC load; according to the voltage information of the energy storage battery, controlling a DC-side output voltage and a parallel voltage of the bidirectional ACDC to match an output voltage of the energy storage battery, wherein the parallel voltage represents a voltage after the bidirectional ACDC and the energy storage battery are connected in parallel, and the parallel voltage is configured for input to the DC load. The method can reduce the cost of the integrated storage and charging device and improve its discharge efficiency.

## Description

### Technical Field

The present disclosure relates to the technical field of power electronics, in particular to a control method for an integrated storage and charging device, an integrated storage and charging device, and a computer-readable storage medium.

### Background Art

A bidirectional DCDC (DC-to-DC converter) is typically used to implement electric energy conversion, energy flow and other functions in equipment equipped with high-rate batteries.

However, the cost of the bidirectional DCDC is high, and its application in equipment will increase the equipment cost. Additionally, when the equipment discharges outward, the discharge must pass through the bidirectional DC/DC converter, which results in relatively low discharge efficiency.

That is, in the related art, there are problems of high equipment cost and low discharge efficiency.

### Summary

Embodiments of the present disclosure aims to provide a control method for an integrated storage and charging device, an integrated storage and charging device, and a computer-readable storage medium, so as to reduce the cost of the integrated storage and charging device and improve its discharge efficiency.

In a first aspect, an embodiment of the present disclosure provides a control method for an integrated storage and charging device. The integrated storage and charging device includes at least one bidirectional ACDC (bidirectional AC-DC converter) and at least one energy storage battery, the energy storage battery and the bidirectional ACDC are connected through a DC bus, and the energy storage battery discharges to a DC load through the DC bus. The method includes: acquiring voltage information of the energy storage battery in response to an instruction to discharge to the DC load; according to the voltage information of the energy storage battery, controlling a DC-side output voltage and a parallel voltage of the bidirectional ACDC to match an output voltage of the energy storage battery, wherein the parallel voltage represents a voltage after the bidirectional ACDC and the energy storage battery are connected in parallel, and the parallel voltage is configured for input to the DC load. Thus, the functions of the bidirectional DCDC converter in the integrated storage and charging device can be replaced by controlling relevant components through an EMS, thereby avoiding conversion losses caused by the bidirectional DCDC. Therefore, costs are reduced and the discharge efficiency is improved.

In some optional implementations, the "acquiring voltage information of the energy storage battery in response to an instruction to discharge to the DC load" includes: determining whether the energy storage battery satisfies a discharge power requirement in response to the instruction to discharge to the DC load; if the energy storage battery satisfies the discharge power requirement, controlling the energy storage battery to discharge; if the energy storage battery does not satisfy the discharge power requirement, controlling the energy storage battery to continue discharging to the DC load, and controlling the bidirectional ACDC to convert external alternating current into direct current and then discharge to the DC load; and acquiring the voltage information of the energy storage battery during the discharging process of the energy storage battery. Thus, by determining whether the energy storage battery satisfies the discharge power requirement, it can be determined whether to add bidirectional ACDC cooperative discharge on the basis of the discharge of the energy storage battery. Therefore, on the basis of satisfying the electricity demand of the DC load, the energy storage battery can be fully utilized, and the service capability of the integrated storage and charging device is improved to a certain extent. Furthermore, when bidirectional ACDC cooperative discharge is added, the DC-side discharge power can be increased, achieving a capacity expansion effect.

In some optional implementations, the "if the energy storage battery satisfies the discharge power requirement, controlling the energy storage battery to discharge" includes: if the energy storage battery satisfies the discharge power requirement, determining whether remaining electricity of the energy storage battery satisfies an electricity demand of the DC load; and if the remaining electricity of the energy storage battery satisfies the electricity demand of the DC load, controlling the energy storage battery to discharge; if the remaining electricity of the energy storage battery does not satisfy the electricity demand of the DC load, controlling the energy storage battery to continue discharging to the DC load, and controlling the bidirectional ACDC to convert external alternating current into direct current and then discharge to the DC load. Thus, by determining whether the remaining electricity of the energy storage battery satisfies the electricity demand of the DC load, it can be determined whether to add bidirectional ACDC cooperative discharge on the basis of the discharge of the energy storage battery. Therefore, on the basis of satisfying the electricity demand of the DC load, the energy storage battery can be fully utilized, and the service capability of the integrated storage and charging device is improved to a certain extent. Furthermore, when bidirectional ACDC cooperative discharge is added, the DC-side discharge power can be increased, achieving a capacity expansion effect.

In some optional implementations, the method further includes: if a SOC of the energy storage battery is less than a SOC lower limit threshold, controlling the energy storage battery to stop discharging, and controlling the bidirectional ACDC to convert external alternating current into direct current and then discharge to the DC load. Thus, the risk of potential safety hazards or damage to the energy storage battery can be reduced, and the electricity demand of the DC load can be met.

In some optional implementations, an AC side of the bidirectional ACDC is further provided with an AC bus, the energy storage battery discharges to an AC load through the AC bus, and the method further includes: controlling the energy storage battery to discharge to the AC load through the bidirectional ACDC in response to an instruction to discharge to the AC load. Thus, on the basis of a preexisting DC bus in the integrated storage and charging device, an AC bus is added, enabling the integrated storage and charging device to discharge not only to DC loads but also to AC loads, thereby improving the application flexibility of the integrated storage and charging device.

In some optional implementations, the "controlling the energy storage battery to discharge to the AC load through the bidirectional ACDC in response to an instruction to discharge to the AC load" includes: determining whether the AC load includes grid equipment in response to the instruction to discharge to the AC load; and if the AC load includes grid equipment, controlling the energy storage battery to discharge to the grid equipment through the bidirectional ACDC in a case where the grid equipment allows reverse power flow to a grid; if the AC load includes grid equipment, controlling the energy storage battery to discharge to other AC loads through the bidirectional ACDC in a case where the grid equipment does not allow reverse power flow to the grid. Thus, in a case where the grid equipment allows reverse power flow to the grid, the energy storage battery can be controlled to supply power to the grid equipment, thereby stabilizing the power grid load. However, in a case where the grid equipment does not allow reverse power flow to the grid, the energy storage battery can be controlled to supply power to other AC loads to satisfy their power demand, thereby giving full play to its discharge function.

In some optional implementations, the "controlling the energy storage battery to discharge to the grid equipment through the bidirectional ACDC in a case where the grid equipment allows reverse power flow to a grid" includes: in a case where the grid equipment allows reverse power flow to the grid, if a required power of the grid equipment is greater than or equal to a discharge power of the energy storage battery, controlling the energy storage battery to discharge to the grid equipment through the bidirectional ACDC; if the required power of the grid equipment is less than the discharge power of the energy storage battery, controlling the energy storage battery to discharge to the grid equipment and other AC loads through the bidirectional ACDC. Thus, whether the energy storage battery discharges to other AC loads can be adaptively determined according to the power required by the grid equipment and the discharge power of the energy storage battery, so that the demand of the grid equipment can be prioritized, the power grid load can be stabilized, the power demand of other AC loads can be met to the greatest extent, and the service capability can be improved.

In some optional implementations, the method further includes: controlling the bidirectional ACDC to receive external alternating current to charge the energy storage battery in response to a charging instruction. Thus, the charging function of the energy storage battery can also be implemented by controlling the bidirectional ACDC, so that the bidirectional DCDC can also be omitted, reducing costs and improving the charging efficiency.

In a second aspect, an embodiment of the present disclosure provides a control apparatus for an integrated storage and charging device. The integrated storage and charging device includes at least one bidirectional ACDC and at least one energy storage battery, the energy storage battery and the bidirectional ACDC are connected through a DC bus, and the energy storage battery discharges to a DC load through the DC bus. The apparatus includes: an acquisition module, configured to acquire voltage information of the energy storage battery in response to an instruction to discharge to the DC load; and a DC control module, configured to according to the voltage information of the energy storage battery, control a DC-side output voltage and a parallel voltage of the bidirectional ACDC to match an output voltage of the energy storage battery, wherein the parallel voltage represents a voltage after the bidirectional ACDC and the energy storage battery are connected in parallel, and the parallel voltage is configured for input to the DC load. Thus, the functions of the bidirectional DCDC converter in the integrated storage and charging device can be replaced by controlling relevant components through an EMS, thereby avoiding conversion losses caused by the bidirectional DCDC. Therefore, costs are reduced and the discharge efficiency is improved.

In a third aspect, an embodiment of the present disclosure provides an integrated storage and charging device, including: at least one bidirectional ACDC; at least one energy storage battery, wherein the energy storage battery is connected to the bidirectional ACDC through a DC bus, and the energy storage battery discharges to a DC load through the DC bus; and an energy management system, configured to perform the steps in the method provided in the first aspect above.

In a fourth aspect, an embodiment of the present disclosure provides a computer-readable storage medium having a computer program stored thereon. When the computer program is executed by a processor, the steps in the method provided in the first aspect above are performed.

In a fifth aspect, an embodiment of the present disclosure provides a computer program product, which includes a computer program or instructions, and when the computer program or instructions are executed by a processor, the method as described in the first aspect is performed.

The additional features and advantages of the present disclosure will be set forth in the subsequent description, and some will become apparent from the description, or may be appreciated through practice of embodiments of the present disclosure. The objectives and other advantages of the present disclosure can be achieved and obtained through the structures particularly pointed out in the written description, claims and accompanying drawings.

### Brief Description of Drawings

To explain the technical solutions of the embodiments of the present disclosure more clearly, the accompanying drawings will be briefly introduced. It should be understood that the drawings merely show some embodiments of the present disclosure, so they should not be regarded as limiting the scope. For a person of ordinary skill in the art, other related drawings may be obtained according to these drawings without inventive effort.
FIG. 1 is a schematic structural diagram of an integrated storage and charging device provided in an embodiment of the present disclosure;
FIG. 2 is a flowchart of a control method for an integrated storage and charging device provided in an embodiment of the present disclosure;
FIG. 3 is a schematic diagram of interaction between an integrated storage and charging device and external equipment provided in an embodiment of the present disclosure; and
FIG. 4 is a structural block diagram of a control apparatus for an integrated storage and charging device provided in an embodiment of the present disclosure.

### Detailed Description of Embodiments

The technical solutions in the embodiments of the present disclosure will be clearly and completely described below with reference to the accompanying drawings. Obviously, the described embodiments are merely part of the embodiments of the present disclosure, but not all embodiments. The components of the embodiments of the present disclosure generally described and illustrated in the drawings herein may be arranged and designed in various different configurations. Therefore, the following detailed description of the embodiments of the present disclosure provided in the accompanying drawings is not intended to limit the scope of the claimed disclosure, but merely represents selected embodiments thereof. Based on the embodiments in the present disclosure, all other embodiments obtained by a person skilled in the art without inventive effort shall fall within the protection scope of the present disclosure.

It should be noted that similar reference numerals and letters denote similar items in the following drawings. Thus, once an item is defined in one drawing, it requires no further definition or explanation in subsequent drawings. In addition, in the present disclosure, terms such as "first", "second", and so on., are merely for distinguishing descriptions and should not be construed as indicating or implying relative importance.

It should be noted that, where there is no conflict, the embodiments in the present disclosure or the technical features in the embodiments may be combined.

In the related art, there are problems of high equipment cost and low discharge efficiency. To solve this problem, the present disclosure provides a control method for an integrated storage and charging device, an integrated storage and charging device, and a computer-readable storage medium. Furthermore, by controlling the input voltage of the load to change with the voltage change of the energy storage battery in the integrated storage and charging device, the function of the bidirectional DCDC in the related art is implemented. Therefore, the integrated storage and charging device provided in the present disclosure does not need to be equipped with a bidirectional DCDC, thereby reducing equipment cost and improving discharge efficiency.

The defects existing in the above solutions in related art are all results obtained by the inventor after practice and careful research. Therefore, the discovery process of the above problems and the solutions proposed by the following embodiments of the present disclosure for the above problems should be the contributions made by the inventor to the present disclosure.

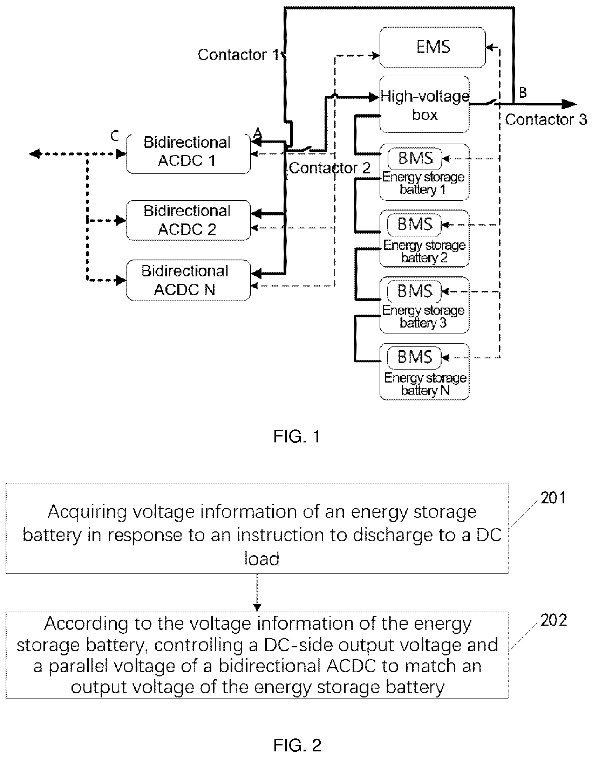

To facilitate understanding, the present disclosure first sets forth the structure of the integrated storage and charging device. Please refer to FIG. 1, which shows a schematic diagram of an integrated storage and charging device provided in an embodiment of the present disclosure. As shown in FIG. 1, the integrated storage and charging device may include a bidirectional ACDC, an energy storage battery, and an energy management system (EMS). The energy storage battery is connected to the bidirectional ACDC through a DC bus, and the energy storage battery can discharge to an external DC load through the DC bus. Furthermore, the EMS may be communicatively connected to the battery management system (BMS) of the energy storage battery and the bidirectional ACDC through a CAN bus to control both.

It should be noted that the integrated storage and charging device may include one or more bidirectional ACDCs, and multiple bidirectional ACDCs may be connected in parallel. In addition, the integrated storage and charging device may further include one or more energy storage batteries, and multiple energy storage batteries may be connected in series.

Furthermore, the integrated storage and charging device may further include a high-voltage box, and the high-voltage box may be used as the electric energy output port of the energy storage battery to uniformly charge or discharge the energy storage battery, thereby facilitating the management of the charging and discharging process.

Furthermore, the integrated storage and charging device may further include multiple contactors, for example, and the EMS can enable or disable the corresponding discharge circuit or charge circuit by controlling the opening and closing of the contactors, thereby implementing the charging and discharging functions of the energy storage battery. It should be noted that the aforesaid contactors may specifically be DC contactors.

In some application scenarios, a control method for the integrated storage and charging device may be implemented through the energy management system (EMS) of the integrated storage and charging device. In other application scenarios, the control method for the integrated storage and charging device may also be implemented through a cloud platform, which is not limited in the present disclosure. Furthermore, the following description is provided in the context of implementation with the EMS.

Specifically, please refer to FIG. 2, which shows a flowchart of a control method for the integrated storage and charging device provided in an embodiment of the present disclosure. As shown in FIG. 2, the control method for the integrated storage and charging device includes the following steps 201 to 202.

Step 201: acquiring voltage information of the energy storage battery in response to an instruction to discharge to the DC load.

The aforesaid DC load refers to equipment or systems that can use direct current. For example, it may include a DCDC charging system, a DCDC charging pile, an electric vehicle, and so on.

In some application scenarios, after the integrated storage and charging device is connected to the DC load through the DC bus, the DC load may, for example, send a discharge request instruction to the EMS through the CAN bus, and then the EMS may respond to the instruction to discharge to the DC load and then acquire the voltage information of the energy storage battery.

Step 202: according to the voltage information of the energy storage battery, controlling a DC-side output voltage and a parallel voltage of the bidirectional ACDC to match an output voltage of the energy storage battery, wherein the parallel voltage represents a voltage after the bidirectional ACDC and the energy storage battery are connected in parallel, and the parallel voltage is configured for input to the DC load.

Please continue to refer to FIG. 1. The DC-side output voltage of the aforesaid bidirectional ACDC is the output voltage of node A, the aforesaid parallel voltage is the output voltage of node B, and the output voltage of the aforesaid energy storage battery may be, for example, the output voltage of the high-voltage box.

Thus, the EMS can control the matching of the three, so that the energy storage battery and/or the bidirectional ACDC can discharge to the DC load. In some application scenarios, the EMS may receive the output voltage of the energy storage battery in real time, then control the DC-side output voltage of the bidirectional ACDC to be the same as the output voltage of the energy storage battery or make the error between them within a preset error, and control the parallel voltage to be the same as the output voltage of the energy storage battery or make the difference between them within a preset error range, thereby controlling the matching of the three.

Furthermore, after receiving the output voltage of the energy storage battery, the EMS may, for example, set the value of the DC-side output voltage and the value of the parallel voltage of the bidirectional ACDC to the value of the output voltage of the energy storage battery or a value within the corresponding preset error range, thereby implementing the control process.

In these application scenarios, when the EMS receives the output voltage of the energy storage battery, it may, for example, set the values of the other two within 100 milliseconds. Thus, the other two can quickly follow the change of the output voltage of the energy storage battery, so that the three can remain matched.

It should be noted that during the discharging process of the energy storage battery, its voltage information may change continuously. Therefore, the DC-side output voltage and parallel voltage of the bidirectional ACDC will also change continuously with the voltage information of the energy storage battery, and then the EMS can control the dynamic matching of the three.

Therefore, by controlling the DC-side output voltage and parallel voltage of the bidirectional ACDC to match the output voltage of the energy storage battery, the EMS can implement functions of the bidirectional DCDC such as electric energy conversion and energy flow. Thus, in this implementation, the functions of the bidirectional DCDC converter in the integrated storage and charging device may be replaced by controlling relevant components through an EMS, thereby avoiding conversion losses caused by the bidirectional DCDC. Therefore, costs are reduced and the discharge efficiency is improved.

In some optional implementations, the "acquiring voltage information of the energy storage battery in response to an instruction to discharge to the DC load" described in step 201 above includes the following sub-steps 2011 to 2014.

Sub-step 2011: determining whether the energy storage battery satisfies a discharge power requirement in response to the instruction to discharge to the DC load.

The aforesaid discharge power requirement refer to the power requirement that the energy storage battery needs to satisfy when discharging outward. In some application scenarios, for example, the maximum discharge power and minimum discharge power may be preset. In this case, the discharge power requirement may include that the discharge power of the energy storage battery is between the minimum discharge power and the maximum discharge power, so that the integrated storage and charging device can discharge outward safely, stably and continuously.

Sub-step 2012: if the energy storage battery satisfies the discharge power requirement, controlling the energy storage battery to discharge.

It should be noted that since the energy storage battery satisfies the discharge power requirement, only the energy storage battery may be controlled to discharge.

Sub-step 2013: if the energy storage battery does not satisfy the discharge power requirement, controlling the energy storage battery to continue discharging to the DC load, and controlling the bidirectional ACDC to convert external alternating current into direct current and then discharge to the DC load.

That is, when the energy storage battery does not satisfy the discharge power requirement, bidirectional ACDC cooperative discharge may be introduced on the basis of controlling the discharge of the energy storage battery to satisfy the electricity demand of the DC load. In some application scenarios, the aforesaid external alternating current may be, for example, commercial power from the power grid.

Sub-step 2014: acquiring the voltage information of the energy storage battery during the discharging process of the energy storage battery.

It should be noted that during the discharging process of the energy storage battery, the BMS may monitor in real time whether there is any abnormality in the state of the battery cells or battery packs of the energy storage battery. If there is an abnormality, the BMS may send an abnormal signal to the EMS, and then the EMS may issue relevant instructions according to the abnormal signal to reduce the risk of damage to the energy storage battery. For example, the EMS may instruct the BMS to limit the output power or suspend discharging, and so on. The aforesaid abnormal signals may include, for example, voltage, current, temperature, SOC, SOH, and other abnormal signals of the battery cells or battery packs.

In this implementation, by determining whether the energy storage battery satisfies the discharge power requirement, it can be determined whether to add bidirectional ACDC cooperative discharge on the basis of the discharge of the energy storage battery. Therefore, on the basis of satisfying the electricity demand of the DC load, the energy storage battery can be fully utilized, and the service capability of the integrated storage and charging device is improved to a certain extent. Furthermore, when bidirectional ACDC cooperative discharge is added, the DC-side discharge power can be increased, achieving a capacity expansion effect.

In some optional implementations, the "if the energy storage battery satisfies the discharge power requirement, controlling the energy storage battery to discharge" described in sub-step 2012 above includes the following steps.

Sub-step 1, if the energy storage battery satisfies the discharge power requirement, determining whether remaining electricity of the energy storage battery satisfies an electricity demand of the DC load.

Sub-step 2, if the remaining electricity of the energy storage battery satisfies the electricity demand of the DC load, controlling the energy storage battery to discharge.

It should be noted that since the remaining electricity of the energy storage battery satisfies the electricity demand of the DC load, only the energy storage battery may be controlled to discharge.

Sub-step 3, if the remaining electricity of the energy storage battery does not satisfy the electricity demand of the DC load, controlling the energy storage battery to continue discharging to the DC load, and controlling the bidirectional ACDC to convert external alternating current into direct current and then discharge to the DC load.

That is, since the remaining electricity of the energy storage battery does not satisfy the electricity demand of the DC load, bidirectional ACDC cooperative discharge may be introduced on the basis of controlling the discharge of the energy storage battery, so that the DC load can satisfy its power demand.

In this implementation, by determining whether the remaining electricity of the energy storage battery satisfies the electricity demand of the DC load, it can be determined whether to add bidirectional ACDC cooperative discharge on the basis of the discharge of the energy storage battery. Therefore, on the basis of satisfying the electricity demand of the DC load, the energy storage battery can be fully utilized, and the service capability of the integrated storage and charging device is improved to a certain extent. Furthermore, when bidirectional ACDC cooperative discharge is added, the DC-side discharge power can be increased, achieving a capacity expansion effect.

In some optional implementations, the method further includes step 203: if a SOC of the energy storage battery is less than a SOC lower limit threshold, controlling the energy storage battery to stop discharging, and controlling the bidirectional ACDC to convert external alternating current into direct current and then discharge to the DC load.

The aforesaid SOC lower limit threshold may be set by an operator based on experience, or determined according to the discharge depth of the energy storage battery, which is not limited in the present disclosure.

Furthermore, during the discharging process of the energy storage battery, if its SOC is less than the SOC lower limit threshold, the energy storage battery may be controlled to stop discharging to reduce the risk of potential safety hazards or damage to the energy storage battery.

Furthermore, the EMS may control the bidirectional ACDC to discharge to the DC load when the energy storage battery stops discharging, thereby satisfying the electricity demand of the DC load.

In some optional implementations, an AC side of the bidirectional ACDC is further provided with an AC bus, the energy storage battery discharges to an AC load through the AC bus, and the method further includes step 204: controlling the energy storage battery to discharge to the AC load through the bidirectional ACDC in response to an instruction to discharge to the AC load.

Please continue to refer to FIG. 1. The AC side of the bidirectional ACDC is the side where node C is located.

The aforesaid AC load refers to equipment or systems that may use alternating current. It may include, for example, ACDC charging systems, household appliances, grid equipment, and so on.

In some application scenarios, after the integrated storage and charging device is connected to the AC load through the AC bus, the AC load may send a discharge request instruction to the EMS through the CAN bus, for example, and then the EMS may respond to the instruction to discharge to the AC load and then control the energy storage battery to discharge. Furthermore, the energy storage battery may output direct current, which is converted into alternating current by the bidirectional ACDC and then transmitted to the AC load.

In this implementation, on the basis of a preexisting DC bus in the integrated storage and charging device, an AC bus is added, enabling the integrated storage and charging device to discharge not only to DC loads but also to AC loads, thereby improving the application flexibility of the integrated storage and charging device.

In some application scenarios, the power grid may supply power to the integrated storage and charging device, and the integrated storage and charging device may also supply power to the power grid. Therefore, in some optional implementations, the "controlling the energy storage battery to discharge to the AC load through the bidirectional ACDC in response to an instruction to discharge to the AC load" described in step 204 above includes the following sub-steps 2041 to 2043.

Sub-step 2041: determining whether the AC load includes grid equipment in response to the instruction to discharge to the AC load.

In some application scenarios, the EMS may preset the identifier of the grid equipment, for example. Thus, if the identifier of the grid equipment is detected in the instruction, it can be determined that the current AC load is the grid equipment.

Sub-step 2042: if the AC load includes grid equipment, controlling the energy storage battery to discharge to the grid equipment through the bidirectional ACDC in a case where the grid equipment allows reverse power flow to a grid.

The aforesaid reverse power flow to the grid refers to supplying power to the grid equipment in reverse. Furthermore, if the grid equipment allows the integrated storage and charging device to supply power to it in reverse, the EMS may control the energy storage battery to output direct current, which is then converted into alternating current by the bidirectional ACDC and transmitted to the grid equipment.

Sub-step 2043: if the AC load includes grid equipment, controlling the energy storage battery to discharge to other AC loads through the bidirectional ACDC in a case where the grid equipment does not allow reverse power flow to the grid.

That is, when the grid equipment does not allow the integrated storage and charging device to supply power to it in reverse, the EMS may control the energy storage battery to discharge to other AC loads, thereby satisfying the power demand of other AC loads.

It should be noted that if the AC load does not include grid equipment, the energy storage battery may be controlled to discharge to the relevant AC load.

In this implementation, in a case where the grid equipment allows reverse power flow to the grid, the energy storage battery can be controlled to supply power to the grid equipment, thereby stabilizing the power grid load. However, in a case where the grid equipment does not allow reverse power flow to the grid, the energy storage battery can be controlled to supply power to other AC loads to satisfy their power demand, thereby giving full play to its discharge function.

In some optional implementations, the "controlling the energy storage battery to discharge to the grid equipment through the bidirectional ACDC in a case where the grid equipment allows reverse power flow to a grid" described in sub-step 2042 above includes:
in a case where the grid equipment allows reverse power flow to the grid, if a required power of the grid equipment is greater than or equal to a discharge power of the energy storage battery, controlling the energy storage battery to discharge to the grid equipment through the bidirectional ACDC;
if the required power of the grid equipment is less than the discharge power of the energy storage battery, controlling the energy storage battery to discharge to the grid equipment and other AC loads through the bidirectional ACDC.

That is, when the required power of the grid equipment is greater than or equal to the discharge power of the energy storage battery, the EMS may control to disconnect of the discharge path from the energy storage battery to other AC loads, thereby controlling the energy storage battery to prioritize discharge to the grid equipment. When the required power of the grid equipment is less than the discharge power of the energy storage battery, the EMS may establish conduction of the discharge path from the energy storage battery to other AC loads, thereby controlling the energy storage battery to discharge to the grid equipment and other AC loads respectively.

In this implementation, whether the energy storage battery discharges to other AC loads can be adaptively determined according to the power required by the grid equipment and the discharge power of the energy storage battery, so that the demand of the grid equipment can be prioritized, the power grid load can be stabilized, the power demand of other AC loads can be met to the greatest extent, and the service capability can be improved.

In some optional implementations, the method further includes: controlling the bidirectional ACDC to receive external alternating current to charge the energy storage battery in response to a charging instruction.

In some application scenarios, the aforesaid charging instruction may be issued by the BMS, for example. For example, the BMS may send a charging instruction to the EMS when it detects that the SOC of the energy storage battery is lower than the SOC lower limit threshold. In other application scenarios, the aforesaid charging instruction may also be autonomously detected by the EMS, for example. For example, an operator may connect the integrated storage and charging device to a charging device. Thus, when the EMS detects that the connection between the two is normal, it can be regarded that a charging instruction has been sent.

In some application scenarios, the bidirectional ACDC may, for example, receive alternating current from grid equipment, convert it into direct current, and then transmit it to the energy storage battery to enable the energy storage battery to store electricity.

It should be noted that during the discharging process of the energy storage battery, the BMS may monitor in real time whether there is any abnormality in the state of the battery cells or battery packs of the energy storage battery. If there is an abnormality, the BMS may send an abnormal signal to the EMS, and then the EMS may issue relevant instructions according to the abnormal signal to reduce the risk of damage to the energy storage battery. For example, the EMS may instruct the BMS to limit the output power or suspend charging, and so on. The aforesaid abnormal signals may include, for example, voltage, current, temperature, SOC, SOH, and other abnormal signals of the battery cells or battery packs.

Furthermore, the EMS may stop charging the energy storage battery when it detects that the SOC of the energy storage battery reaches a set value or the SOC upper limit threshold.

In this implementation, the charging function of the energy storage battery may also be implemented by controlling the bidirectional ACDC, so that the bidirectional DCDC can also be omitted, reducing costs and improving charging efficiency.

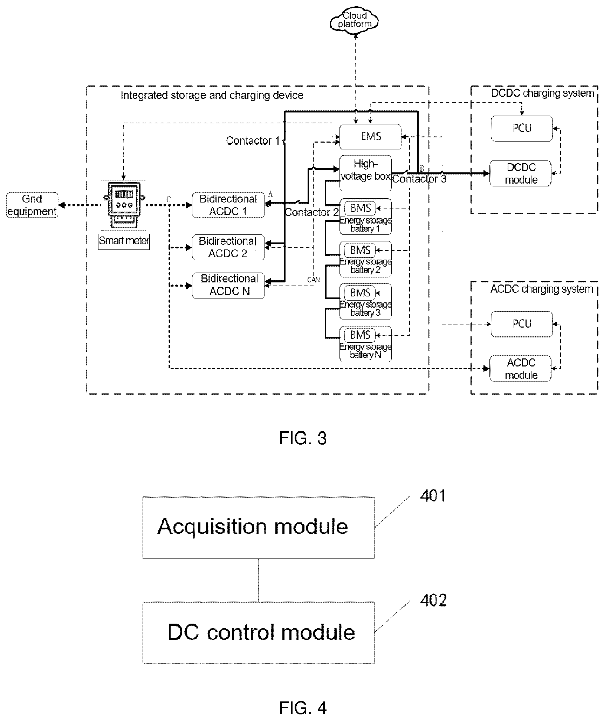

To further elaborate the technical solution of the present disclosure, please refer to FIG. 3, which shows a schematic diagram of interaction between an integrated storage and charging device and external equipment provided in an embodiment of the present disclosure. As shown in FIG. 3, the DCDC charging system is a DC load, its charging power control unit (PCU) may send an instruction to the EMS to discharge to the DCDC charging system, and its DCDC module may receive the electric energy released by the integrated storage and charging device. The ACDC charging system and grid equipment are AC loads, the charging power control unit (PCU) of the ACDC charging system may send an instruction to the EMS to discharge to it, and its ACDC module may receive the electric energy released by the integrated storage and charging device. In addition, the electric power control unit (PCU) may communicate with the EMS through a CAN bus. Furthermore, the EMS may, for example, communicate with the cloud platform through wired (e.g., Ethernet) or wireless means to implement information interaction between the cloud platform and the EMS, thereby implementing the control of the integrated storage and charging device by the cloud platform.

Furthermore, the integrated storage and charging device may include three contactors. The DC-side output terminal of the bidirectional ACDC (node A as shown in the figure), contactor 2, the output terminal of the energy storage battery (or a high-voltage box when present), and contactor 3 may be connected sequentially and then connected in parallel with contactor 1. Then, the energy storage battery and/or the bidirectional ACDC may discharge to the DCDC charging system through node B.

Furthermore, the integrated storage and charging device may further include a smart meter, which may be located on the path between the AC-side output terminal of the bidirectional ACDC and the grid equipment, and is configured to enable and disable the AC bus between the bidirectional ACDC and the grid equipment. In addition, the smart meter may communicate with the EMS through the RS485 electrical standard or Ethernet.

Thus, when the integrated storage and charging device supplies power to the DCDC charging system through the DC bus, the EMS can respond to the instruction to discharge to the DCDC charging system and determine whether the energy storage battery satisfies the discharge power requirement.

If the energy storage battery satisfies the discharge power requirement, the EMS may control contactor 3 to close, and control contactors 1 and 2 to open, so that the energy storage battery discharges to the DCDC module. Furthermore, the EMS continues to determine whether the remaining electricity of the energy storage battery satisfies the electricity demand of the DC load; if the remaining electricity of the energy storage battery satisfies the electricity demand of the DC load, it continues to control the energy storage battery to discharge; if the remaining electricity of the energy storage battery does not satisfy the electricity demand of the DC load, contactor 1 is then closed to control the energy storage battery to continue discharging to the DC load and control the bidirectional ACDC to convert external alternating current into direct current and then discharge to the DC load.

If the energy storage battery does not satisfy the discharge power requirement, contactors 1 and 3 are controlled to close and contactor 2 is controlled to open, thereby controlling the energy storage battery to continue discharging to the DC load and control the bidirectional ACDC to convert external alternating current into direct current and then discharge to the DC load.

Additionally, during the discharging process of the energy storage battery, the voltage information of the energy storage battery is acquired.

Then, according to the voltage information of the energy storage battery, the voltage of node A and the voltage of node B may be controlled to match the output voltage of the energy storage battery.

Furthermore, when the SOC of the energy storage battery is less than the SOC lower limit threshold, contactors 2 and 3 are disconnected and contactor 1 is closed to disconnect the discharge path of the energy storage battery and enable the bidirectional ACDC to discharge to the DCDC charging system.

Furthermore, when the integrated storage and charging device supplies power to the ACDC charging system through the AC bus, if the grid equipment allows reverse power flow to the grid, when the required power of the grid equipment is greater than or equal to the discharge power of the energy storage battery, information indicating no power supply may be sent by the EMS to the PCU of the ACDC charging system, causing the PCU to control the ACDC charging system to stop working when necessary. Then, the EMS may control contactors 1 and 3 to open, control contactor 2 to close, and control the smart meter to establish conduction of the path where the grid equipment is located, thereby controlling the energy storage battery to discharge to the grid equipment through the bidirectional ACDC. When the required power of the grid equipment is less than the discharge power of the energy storage battery, information indicating power supply may be sent to the PCU of the ACDC charging system, causing the PCU to control the ACDC charging system to prepare for charging. Then, the EMS may control contactor 2 to close, control contactors 1 and 3 to open, and control the smart meter to establish conduction of the path where the grid equipment is located, thereby controlling the energy storage battery to discharge to the grid equipment and the ACDC charging system through the bidirectional ACDC.

Furthermore, if the grid equipment does not allow reverse power flow to the grid, the EMS may control the smart meter to disconnect the path where the grid equipment is located, thereby controlling the energy storage battery to discharge to the ACDC charging system through the bidirectional ACDC.

In addition, when the grid equipment charges the energy storage battery through the AC bus, the EMS may close contactor 2 and open contactors 1 and 3, thereby establishing conduction of the charging path between the grid equipment and the energy storage battery.

It can be understood by a person skilled in the art that in the above method of specific embodiments, the writing sequence of each step does not mean a strict sequence of performance and does not constitute any limitation on the implementation process. The specific sequence of performance of each step should be determined according to its function and possible internal logic.

Please refer to FIG. 4, which shows a structural block diagram of a control apparatus for an integrated storage and charging device provided in an embodiment of the present disclosure. The control apparatus for the integrated storage and charging device may be a module, a program segment, or codes on the integrated storage and charging device. It should be understood that the apparatus corresponds to the method embodiment in FIG. 2 above and can perform each step involved in the method embodiment in FIG. 2.

Optionally, the integrated storage and charging device includes at least one bidirectional ACDC and at least one energy storage battery, the energy storage battery and the bidirectional ACDC are connected through a DC bus, and the energy storage battery discharges to a DC load through the DC bus. The apparatus includes: an acquisition module 401, configured to acquire voltage information of the energy storage battery in response to an instruction to discharge to the DC load; and a DC control module 402, configured to according to the voltage information of the energy storage battery, control a DC-side output voltage and a parallel voltage of the bidirectional ACDC to match an output voltage of the energy storage battery, wherein the parallel voltage represents a voltage after the bidirectional ACDC and the energy storage battery are connected in parallel, and the parallel voltage is configured for input to the DC load.

In some optional implementations, the acquisition module 401 is further configured to: determine whether the energy storage battery satisfies a discharge power requirement in response to the instruction to discharge to the DC load; if the energy storage battery satisfies the discharge power requirement, control the energy storage battery to discharge; if the energy storage battery does not satisfy the discharge power requirement, control the energy storage battery to continue discharging to the DC load, and control the bidirectional ACDC to convert external alternating current into direct current and then discharge to the DC load; and acquire the voltage information of the energy storage battery during the discharging process of the energy storage battery.

In some optional implementations, the acquisition module 401 is further configured to: if the energy storage battery satisfies the discharge power requirement, determine whether remaining electricity of the energy storage battery satisfies an electricity demand of the DC load; and if the remaining electricity of the energy storage battery satisfies the electricity demand of the DC load, control the energy storage battery to discharge; if the remaining electricity of the energy storage battery does not satisfy the electricity demand of the DC load, control the energy storage battery to continue discharging to the DC load, and control the bidirectional ACDC to convert external alternating current into direct current and then discharge to the DC load.

In some optional implementations, the apparatus further includes an SOC control module, and the SOC control module is configured to: if an SOC of the energy storage battery is less than a SOC lower limit threshold, control the energy storage battery to stop discharging, and control the bidirectional ACDC to convert external alternating current into direct current and then discharge to the DC load.

In some optional implementations, an AC side of the bidirectional ACDC is further provided with an AC bus, and the energy storage battery discharges to an AC load through the AC bus, and the apparatus further includes an AC control module configured to: control the energy storage battery to discharge to the AC load through the bidirectional ACDC in response to an instruction to discharge to the AC load.

In some optional implementations, the AC control module is further configured to: determine whether the AC load includes grid equipment in response to the instruction to discharge to the AC load; and if the AC load includes grid equipment, control the energy storage battery to discharge to the grid equipment through the bidirectional ACDC in a case where the grid equipment allows reverse power flow to a grid; if the AC load includes grid equipment, control the energy storage battery to discharge to other AC loads through the bidirectional ACDC in a case where the grid equipment does not allow reverse power flow to the grid.

In some optional implementations, the AC control module is further configured to: in a case where the grid equipment allows reverse power flow to the grid, if a required power of the grid equipment is greater than or equal to a discharge power of the energy storage battery, control the energy storage battery to discharge to the grid equipment through the bidirectional ACDC; if the required power of the grid equipment is less than the discharge power of the energy storage battery, control the energy storage battery to discharge to the grid equipment and other AC loads through the bidirectional ACDC.

In some optional implementations, the apparatus further includes a charging module configured to: control the bidirectional ACDC to receive external alternating current to charge the energy storage battery in response to a charging instruction.

It should be noted that a person skilled in the art will clearly appreciate that for brevity and clarity of description, specific operation processes of the described apparatus may refer to corresponding processes in the aforementioned method embodiments, which are therefore not repeated here.

An embodiment of the present disclosure provides a computer-readable storage medium having a computer program stored thereon. When the computer program is executed by a processor, any implementation of the method embodiment shown in FIG. 1 can be performed.

An embodiment of the present disclosure provides a computer program product, which includes a computer program stored on a non-transient computer-readable storage medium, and the computer program includes a program instruction, and when the program instruction is executed by a computer, the computer can perform the methods provided in the above method embodiments. For example, the method may include: acquiring voltage information of the energy storage battery in response to an instruction to discharge to the DC load; according to the voltage information of the energy storage battery, controlling a DC-side output voltage and a parallel voltage of the bidirectional ACDC to match an output voltage of the energy storage battery, wherein the parallel voltage represents a voltage after the bidirectional ACDC and the energy storage battery are connected in parallel, and the parallel voltage is configured for input to the DC load.

In the embodiments provided in the present disclosure, it should be understood that the disclosed apparatuses and methods may be implemented in other ways. The apparatus embodiments described above are merely illustrative. For example, the division of the units is merely a division of logical functions, and there may be other division ways in actual implementation. For another example, a plurality of units or components may be combined or integrated into another system, or some features may be ignored or not implemented. Additionally, the mutual couplings, direct couplings or communication connections shown or discussed may be indirect couplings or communication connections through some communication interfaces, apparatuses or units, and may be in electrical, mechanical or other forms.

In addition, the units described as separate components may or may not be physically separated, and the components displayed as units may or may not be physical units, that is, they may be located in one place or distributed to a plurality of network units. Part or all of the units may be selected according to actual needs to achieve the objectives of the solutions of the embodiments.

Furthermore, each functional module in each embodiment of the present disclosure may be integrated to form an independent part, or each module may exist independently, or two or more modules may be integrated to form an independent part.

Throughout this specification, relational terms such as first and second are used solely to distinguish one entity or operation from another entity or operation, and do not necessarily require or imply any such actual relationship or sequence between such entities or operations.

The above are merely illustrative embodiments of the present disclosure and are not intended to limit the protection scope of the present disclosure. For a person skilled in the art, the present disclosure may have various modifications and changes. Any modification, equivalent substitution, improvement, and so on. made within the spirit and principles of the present disclosure shall fall within the protection scope of the present disclosure.

## Claims

1. A control method for an integrated storage and charging device, wherein the integrated storage and charging device comprises at least one bidirectional ACDC and at least one energy storage battery, the energy storage battery and the bidirectional ACDC are connected through a DC bus, and the energy storage battery discharges to a DC load through the DC bus, the method comprising:
acquiring voltage information of the energy storage battery in response to an instruction to discharge to the DC load; and
according to the voltage information of the energy storage battery, controlling a DC-side output voltage and a parallel voltage of the bidirectional ACDC to match an output voltage of the energy storage battery, wherein the parallel voltage represents a voltage after the bidirectional ACDC and the energy storage battery are connected in parallel, and the parallel voltage is configured for input to the DC load.

2. **The** method according to claim 1, wherein the step of acquiring voltage information of the energy storage battery in response to an instruction to discharge to the DC load comprises:
determining whether the energy storage battery satisfies a discharge power requirement in response to the instruction to discharge to the DC load;
when the energy storage battery satisfies the discharge power requirement, controlling the energy storage battery to discharge;
when the energy storage battery does not satisfy the discharge power requirement, controlling the energy storage battery to continue discharging to the DC load, and controlling the bidirectional ACDC to convert external alternating current into direct current and then discharge to the DC load; and
acquiring the voltage information of the energy storage battery during the discharging process of the energy storage battery.

3. The method according to claim 2, wherein the step of when the energy storage battery satisfies the discharge power requirement, controlling the energy storage battery to discharge comprises:
when the energy storage battery satisfies the discharge power requirement, determining whether remaining electricity of the energy storage battery satisfies an electricity demand of the DC load; and
when the remaining electricity of the energy storage battery satisfies the electricity demand of the DC load, controlling the energy storage battery to discharge;
when the remaining electricity of the energy storage battery does not satisfy the electricity demand of the DC load, controlling the energy storage battery to continue discharging to the DC load, and controlling the bidirectional ACDC to convert external alternating current into direct current and then discharge to the DC load.

4. The method according to any one of claims 2 to 3, further comprising:
when a SOC of the energy storage battery is less than a SOC lower limit threshold, controlling the energy storage battery to stop discharging, and controlling the bidirectional ACDC to convert external alternating current into direct current and then discharge to the DC load.

5. The method according to any one of claims 1 to 4, wherein an AC side of the bidirectional ACDC is further provided with an AC bus, and the energy storage battery discharges to an AC load through the AC bus, the method further comprising:
controlling the energy storage battery to discharge to the AC load through the bidirectional ACDC in response to an instruction to discharge to the AC load.

6. The method according to claim 5, wherein the step of controlling the energy storage battery to discharge to the AC load through the bidirectional ACDC in response to an instruction to discharge to the AC load comprises:
determining whether the AC load comprises grid equipment in response to the instruction to discharge to the AC load; and
when the AC load comprises the grid equipment, controlling the energy storage battery to discharge to the grid equipment through the bidirectional ACDC in a case where the grid equipment allows reverse power flow to a grid;
when the AC load comprises the grid equipment, controlling the energy storage battery to discharge to other AC loads through the bidirectional ACDC in a case where the grid equipment does not allow reverse power flow to the grid.

7. The method according to claim 6, wherein the step of controlling the energy storage battery to discharge to the grid equipment through the bidirectional ACDC in a case where the grid equipment allows reverse power flow to a grid comprises:
in a case where the grid equipment allows reverse power flow to the grid, when a required power of the grid equipment is greater than or equal to a discharge power of the energy storage battery, controlling the energy storage battery to discharge to the grid equipment through the bidirectional ACDC;
when the required power of the grid equipment is less than the discharge power of the energy storage battery, controlling the energy storage battery to discharge to the grid equipment and other AC loads through the bidirectional ACDC.

8. The method according to any one of claims 1 to 7, further comprising:
controlling the bidirectional ACDC to receive external alternating current to charge the energy storage battery in response to a charging instruction.

9. A control apparatus for an integrated storage and charging device, wherein the integrated storage and charging device comprises at least one bidirectional ACDC and at least one energy storage battery, the energy storage battery and the bidirectional ACDC are connected through a DC bus, and the energy storage battery discharges to a DC load through the DC bus, the apparatus comprising:
an acquisition module (401), configured to acquire voltage information of the energy storage battery in response to an instruction to discharge to the DC load; and
a DC control module (402), configured to according to the voltage information of the energy storage battery, control a DC-side output voltage and a parallel voltage of the bidirectional ACDC to match an output voltage of the energy storage battery, wherein the parallel voltage represents a voltage after the bidirectional ACDC and the energy storage battery are connected in parallel, and the parallel voltage is configured for input to the DC load.

10. The control apparatus for the integrated storage and charging device according to claim 9, wherein the acquisition module (401) is further configured to: determine whether the energy storage battery satisfies a discharge power requirement in response to the instruction to discharge to the DC load; when the energy storage battery satisfies the discharge power requirement, control the energy storage battery to discharge; when the energy storage battery does not satisfy the discharge power requirement, control the energy storage battery to continue discharging to the DC load, and control the bidirectional ACDC to convert external alternating current into direct current and then discharge to the DC load; and acquire the voltage information of the energy storage battery during the discharging process of the energy storage battery.

11. The control apparatus for the integrated storage and charging device according to claim 10, wherein the acquisition module (401) is further configured to: when the energy storage battery satisfies the discharge power requirement, determine whether remaining electricity of the energy storage battery satisfies an electricity demand of the DC load; and when the remaining electricity of the energy storage battery satisfies the electricity demand of the DC load, control the energy storage battery to discharge; when the remaining electricity of the energy storage battery does not satisfy the electricity demand of the DC load, control the energy storage battery to continue discharging to the DC load, and control the bidirectional ACDC to convert external alternating current into direct current and then discharge to the DC load.

12. The control apparatus for the integrated storage and charging device according to claim 10 or 11, wherein the apparatus further comprises an SOC control module, and the SOC control module is configured to: when a SOC of the energy storage battery is less than a SOC lower limit threshold, control the energy storage battery to stop discharging, and control the bidirectional ACDC to convert external alternating current into direct current and then discharge to the DC load.

13. An integrated storage and charging device, comprising:
at least one bidirectional ACDC;
at least one energy storage battery, wherein the energy storage battery is connected to the bidirectional ACDC through a DC bus, and the energy storage battery discharges to a DC load through the DC bus; and
an energy management system, configured to perform the method according to any one of claims 1 to 8.

14. A computer-readable storage medium, having a computer program stored thereon, wherein when the computer program is executed by a processor, the method according to any one of claims 1 to 8 is performed.

15. A computer program product, comprising a computer program or instructions, wherein when the computer program or instructions are executed by a processor, the method according to any one of claims 1 to 8 is performed.
